Europäisches Patentamt

European Patent Office

Office européen des brevets

(19)

(11) Veröffentlichungsnummer: **0 039 798**
A1

(12) **EUROPÄISCHE PATENTANMELDUNG**

(21) Anmeldenummer: **81102948.7**

(22) Anmeldetag: **16.04.81**

(51) Int. Cl.³: **C 04 B 33/32**
**C 04 B 31/12**

(30) Priorität: **14.05.80 DE 3018411**

(43) Veröffentlichungstag der Anmeldung:
**18.11.81 Patentblatt 81/46**

(84) Benannte Vertragsstaaten:
**BE DE FR GB**

(71) Anmelder: **BABCOCK-BSH AKTIENGESELLSCHAFT**
**vormals Büttner-Schilde-Haas AG**
**Parkstrasse 29 Postfach 4 und 6**
**D-4150 Krefeld 11(-Uerdingen(DE)**

(72) Erfinder: **Golde, Ernst, Dipl.-Ing.**
**Hammerschmidtstrasse 26**
**D-4150 Krefeld(DE)**

(72) Erfinder: **Kleinbrahm, Achim**
**Breslauer Strasse 78**
**D-4150 Krefeld(DE)**

(72) Erfinder: **Leininger, Dieter, Dr.-Ing.**
**Waldeck 15**
**D-4300 Essen 1(DE)**

(72) Erfinder: **Köhling, Rolf, Dr.-Ing.**
**Lohbusch 1**
**D-4630 Bochum 6(DE)**

(74) Vertreter: **Hofer, Josef, Dipl.-Phys.**
**BABCOCK-BSH AG Postfach 4 u. 6 Parkstrasse 29**
**D-4150 Krefeld 11 (-Uerdingen)(DE)**

(54) **Verfahren zum Brennen und Keramisieren von Waschbergen.**

(57) Verfahren zum Brennen und Keramisieren von tonerdehaltigen Materialien, welche brennbare Gase und/oder in solche zersetzbare Stoffe enthalten, unter Anwendung einer Trocken-, Glüh- und Kühlstufe sowie unter Ausnutzung der in den brennbaren Gasen enthaltenen Energie für den Prozeßablauf, bei dem das vorgetrocknete Material in einer der Glühstufe (4) vorgeschalteten Entgasungsstufe (2) in sauerstoffarmer Atmosphäre und unterhalb der Sintertemperatur entgast und das freigesetzte bzw. entstehende Gas als Brenngas dem Brenner (6) der Glühstufe (4) zugeführt wird und daß die Entgasungsstufe (2) mit Hilfe von in einer Mischund Reaktionskammer (7) aufbereiteten Rauchgasen der Glühstufe (4) betrieben wird.

EP 0 039 798 A1

Krefeld, den 14. April 1981
T1 - HR/wey - K 80/09 EU

BABCOCK-BSH AKTIENGESELLSCHAFT
vormals Büttner-Schilde-Haas AG,
4150 Krefeld-Uerdingen

Verfahren zum Brennen und Keramisieren von Waschbergen

Die Erfindung betrifft ein Verfahren zum Brennen und Keramisieren von tonerdehaltigen Materialien, welche brennbare Gase und/oder in solche zersetzbare Stoffe enthalten, unter Anwendung einer Trocken-, Glüh- und Kühlstufe sowie unter Ausnutzung der in den brennbaren Gasen enthaltenen Energie für den Prozeßablauf.

Es ist bekannt, Waschberge oder Haldenmaterial von Zechen zur Herstellung von Leichtbauzuschlagstoffen zu verwenden.

Bei einem bekannten Verfahren dieser Art (DE-OS 24 17 519) werden aus obigen Grundmaterialien hergestellte Granalien bis auf die Schweltemperatur des Brennstoffes bzw. die Zündtemperatur der aus dem Brennstoff freiwerdenden Gase durch oxidiertes Gas erhitzt und anschließend sauerstoffhaltige Luft durch die Granalienschicht gedrückt.

Dieses bekannte Verfahren hat jedoch den Nachteil, daß die Energieabgabe der entzündeten Schwelgase völlig unkontrolliert erfolgt und somit leicht zu einer Überhitzung des Produktreaktors führen kann.

- 2 -

- 2 -

0039798

Aufgabe der Erfindung ist es nun, bei einem Verfahren der eingangs genannten Art die für den Prozeßablauf notwendige Energie kontrolliert frei- und gut dosierbar einzusetzen und die Möglichkeit zu schaffen, je nach Prozeßanforderung spezielle Gasbedingungen (Temperatur, Zusammensetzung) einstellen zu können.

Erreicht wird dies nach der Erfindung dadurch, daß das vorgetrocknete Material in einer der Glühstufe vorgeschalteten Entgasungsstufe in sauerstoffarmer Atmosphäre und unterhalb der Sintertemperatur entgast und das freigesetzte bzw. entstehende Gas als Brenngas dem Brenner der Glühstufe zugeführt wird und daß die Entgasungsstufe mit Hilfe von in einer Mischund Reaktionskammer aufbereiteten Rauchgasen der Glühstufe betrieben wird.

Vorteilhaft kann das erfindungsgemäße Verfahren durch die in den Ansprüchen 2 bis 10 aufgezeigten Maßnahmen ergänzt und verfeinert werden.

Die Erfindung sei nun anhand des in der Fig. dargestellten Fließbildes näher erläutert.

Das zu behandelnde Gut, z.B. Waschberge, d.h. das bei der Kohlegewinnung anfallende Bergematerial, welches im wesentlichen aus Tonerde und Quarz besteht und brenn- bzw. vergasbare Substanzen enthält, wird über die Aufgabe 13 in die Trockenstufe 1 eingeschleust und durch die über die Zuleitungen 51 bis 54 aus der Kühlstufe 5 und über die Zuleitungen 43, 44 und 54 aus der Glühstufe 4 kommenden Heißgase bis zur Entgasungstemperatur (Grenztemperatur genannt) aufgeheizt. Die jeweilige Grenztemperatur ist abhängig von den im Gut enthaltenen flüchtigen Bestandteilen, der Aufheizgeschwindigkeit und der Verweilzeit in der Trockenstufe 1. Mit Erreichen der Grenztemperatur wird das Gut über die Zuleitung 14 in die Entgasungsstufe 2 geschleust.

- 3 -

Das Gut durchläuft im Gegenstrom zu den aufbereiteten Rauchgasen, welche über die Zuleitungen 42 und 72 zugeführt werden, die Entgasungsstufe 2. In der Entgasungsstufe 2 wird das Gut von der Grenztemperatur bis knapp unter die Sintertemperatur aufgeheizt. Während dieser Aufheizphase werden die flüchtigen Bestandteile, im folgenden Prozeßgas genannt, freigesetzt. Nach Verlassen der Entgasungsstufe über die Leitung 21 wird das Prozeßgas gegebenenfalls durch Einsprühen von Wasser auf die maximale Betriebstemperatur eingestellt, im Zyklon 9 entstaubt, über die Zuleitungen 23 und 24 der Misch- und Reaktionskammer 7 und über die Zuleitungen 25 und 26 dem Brenner 6 der Glühstufe 4 zugeführt.

Die Überschleusung des Gutes aus der Entgasungsstufe 2 in die Glühstufe 4 erfolgt bei einer Temperatur wenige Grade unterhalb der Sintertemperatur. Um das Gut den Bedingungen des Glühprozesses anzupassen, ist unter Umständen eine Absiebung, wie durch 3 angedeutet, erforderlich.

Durch Zugabe von Kalk in die Entgasungsstufe 2 über die Eingabe 81 kann in der Entgasungsstufe freiwerdender Schwefel bereits gebunden werden.

Die in der Entgasungsstufe 2 eingesetzten Rauchgase aus der Glühstufe 4 müssen hinsichtlich Energieangebot, Temperaturniveau und Sauerstoffgehalt auf die Erfordernisse des Entgasungsverfahrens eingestellt werden. Diese Einstellung erfolgt in der Misch- und Reaktionskammer 7.

Die Inertisierung der Rauchgase erfolgt durch die Zumischung von Prozeßgas und die Verbrennung des überschüssigen Sauerstoffes. Die Temperatur des inertisierten Rauchgases ist der Sintertemperatur des Gutes anzupassen. Durch zusätzliches Zumischen und Rezirkulieren von Prozeßgas kann die Eintrittstemperatur gesenkt werden. Zusätzlicher Energiebedarf der Entgasungsstufe kann durch Verbrennung von Prozeßgas mit vorgewärmter Abluft aus der Kühlstufe gedeckt werden.

In der Glühstufe 4 wird das Gut auf die zum Keramisieren erforderliche Temperatur aufgewärmt. Die Verweilzeit in der Glühstufe 4 wird wesentlich vom Keramisierungsgrad und von der Kornstruktur bestimmt. Die Beheizung der Glühstufe 4 erfolgt über einen mit Prozeßgas und vorgewärmter Luft aus der Kühlstufe 5 gespeisten Brenner 6. Für den Anfahrbetrieb und als Stützfeuerung ist am Brenner 6 eine Zuleitung 61 für einen zusätzlichen Brennstoff vorgesehen. Die Rauchgase aus der Glühstufe 4 werden zum Trocknen und Vorwärmen des Gutes in der Trockenstufe 1 und nach vorheriger Aufbereitung in der Misch- und Reaktionskammer 7 in der Entgasungsstufe 2 eingesetzt. Aus der Glühstufe 4 wird das Gut über die Ausgabe 41 in die Kühlstufe 5 geschleust. Hierin kann als Kühler ein Gegenstromluftkühler eingesetzt werden.

Frischluft wird von dem Gebläse 8 in die Kühlstufe 5 gedrückt und steht vorgewärmt als Verbrennungsluft am Brenner 6 der Glühstufe 4 und an der Misch- und Reaktionskammer 7 zur Verfügung. Ein weiterer Teilstrom durchströmt die Trockenstufe 1, die Entstaubung 11 und wird von dem Gebläse 12 dem Kamin zugeführt. Mit Hilfe der regelbaren Gebläse 8 und 12 und den in den Zuleitungen eingezeichneten Trimmklappen 91 können die Volumenströme und das Druckniveau im Kühlluftkreislauf abgestimmt werden.

Der Prozeßgaskreislauf als wesentlicher Bestandteil dieses Verfahrens ist ein halboffener Kreislauf. Er ermöglicht den Einsatz des in der Entgasungsstufe 2 aus dem Gut gewonnenen Brennstoff im Glühprozeß und die Verwendung der Abwärme aus dem Glühprozeß für die Entgasung. Das mit Rauchgasen verdünnte Prozeßgas wird im Entstauber 9 gereinigt und über das Gebläse 10 der Misch- und Reaktionskammer 7 als Inertisier-, Kühl- bzw. Heizgas der Entgasungsstufe 2 zugeführt. Der Hauptstrom des Prozeßgases wird von

- 5 -

**0039798**

dem Gebläse 10 dem Brenner 6 der Glühstufe 4 zugeführt. Hinter der Glühstufe 4 wird der Rauchgasstrom in einen Teilstrom, der der Entgasungsstufe 2 zugeführt wird, und in den Anteil, der über die Trockenstufe 1, den Entstauber 11 und den Abluftventilator 12 dem Kamin zugeleitet wird, aufgeteilt.

Über die Zuleitung 100 erfolgt die Zuführung von Frischluft.

Die Zuleitung 71 kann zur Brennstoffzufuhr für einen auf die Misch- und Reaktionskammer 7 einwirkenden Brenner zur Reduzierung des Sauerstoffgehaltes der Kammer verwendet werden.

Selbstverständlich ist die Ausführung des erfindungsgemäßen Verfahrens nicht an das dargestellte Fließschema gebunden. So ist beispielsweise alternativ zu dem direkten Einsatz von Rauchgasen aus dem Glühprozeß in der Entgasungsstufe, der eine Verdünnung der Prozeßgase mit Rauchgasen zur Folge hat, ein indirekt beheizter Kreislauf des Prozeßgases denkbar. Hierin wird das im Kreislauf gefahrene Prozeßgas von den Rauchgasen über einen Recuperator aufgewärmt. Ein Teilstrom wird aus dem Prozeßgaskreislauf kontinuierlich abgezweigt und dem Brenner der Glühstufe als Brennstoff zugeleitet.

Das Verfahren nach der Erfindung ist mit den für die einzelnen Prozeßstufen üblichen und bekannten Vorrichtungen durchführbar.

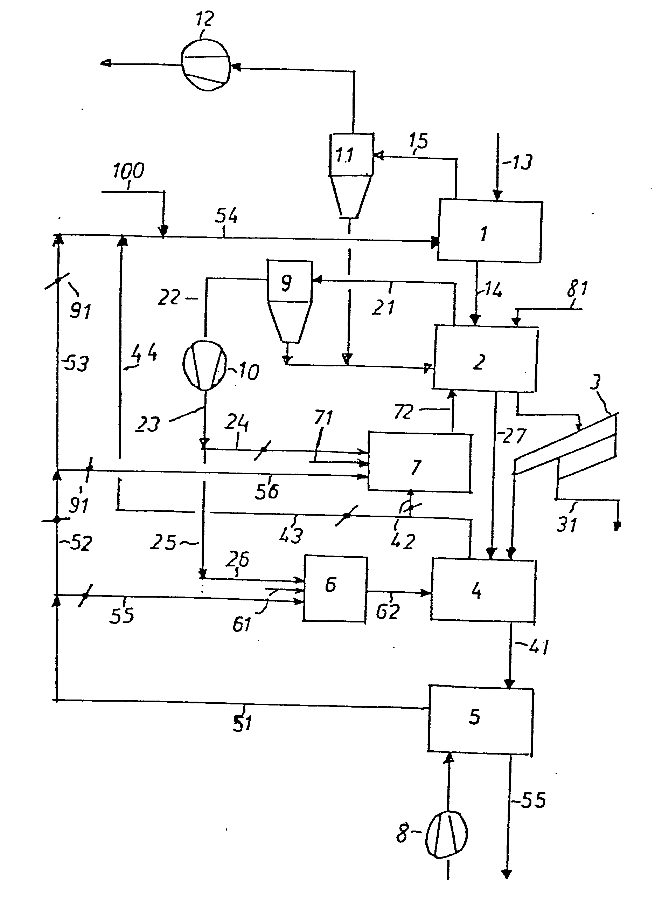

Patentansprüche:

- 6 -

**0039798**

Krefeld, den 14. April 1981
T1 - HR/wey - K 80/09 EU

BABCOCK-BSH AKTIENGESELLSCHAFT
vormals Büttner-Schilde-Haas AG,
4150 Krefeld-Uerdingen

Patentansprüche:

1. Verfahren zum Brennen und Keramisieren von tonerdehaltigen Materialien, welche brennbare Gase und/oder in solche zersetzbare Stoffe enthalten, unter Anwendung einer Trocken-, Glüh- und Kühlstufe sowie unter Ausnutzung der in den brennbaren Gasen enthaltenen Energie für den Prozeßablauf, dadurch gekennzeichnet, daß das vorgetrocknete Material in einer der Glühstufe (4) vorgeschalteten Entgasungsstufe (2) in sauerstoffarmer Atmosphäre und unterhalb der Sintertemperatur entgast und das freigesetzte bzw. entstehende Gas als Brenngas dem Brenner (6) der Glühstufe (4) zugeführt wird und daß die Entgasungsstufe (2) mit Hilfe von in einer Misch- und Reaktionskammer (7) aufbereiteten Rauchgasen der Glühstufe (4) betrieben wird.

2. Verfahren nach Anspruch 1, dadurch gekennzeichnet, daß in der Misch- und Reaktionskammer (7) die Rauchgase der Glühstufe (4) hinsichtlich des Energieangebots, Temperaturniveaus und Sauerstoffgehaltes auf die Erfordernisse des Entgasungsverfahrens eingestellt werden.

3. Verfahren nach Anspruch 2, dadurch gekennzeichnet, daß in der Misch- und Reaktionskammer (7) den Rauchgasen Prozeßgas zugemischt und der überschüssige Sauerstoff verbrannt wird.

4. Verfahren nach Anspruch 1, dadurch gekennzeichnet, daß die Entgasungsstufe (2) mit Hilfe der von den Abgasen der Glühstufe (4) indirekt beheizten Prozeßgase betrieben wird.

5. Verfahren nach mindestens einem der Ansprüche 1 bis 4, dadurch gekennzeichnet, daß die Entgasung in Gegenwart von Kalk durchgeführt wird.

6. Verfahren nach mindestens einem der Ansprüche 1 bis 5, dadurch gekennzeichnet, daß das Prozeßgas entstaubt wird.

7. Verfahren nach mindestens einem der Ansprüche 1 bis 6, dadurch gekennzeichnet, daß das Prozeßgas durch Einsprühen von Wasser auf die erforderliche Betriebstemperatur eingestellt wird.

8. Verfahren nach mindestens einem der Ansprüche 1 bis 7, dadurch gekennzeichnet, daß das Prozeßgas zusammen mit der vorgewärmten Abluft aus der Kühlstufe (5) verbrannt wird.

9. Verfahren nach mindestens einem der Ansprüche 1 bis 8, dadurch gekennzeichnet, daß für den Anfahrbetrieb und als Stützfeuerung dem Brenner (6) der Glühstufe (4) zusätzlicher Brennstoff zugeführt wird.

10. Verfahren nach mindestens einem der Ansprüche 1 bis 9, dadurch gekennzeichnet, daß zusätzlicher Energiebedarf der Entgasungsstufe (2) durch Verbrennung von Prozeßgas mit der vorgewärmten Abluft der Kühlstufe (5) gedeckt wird.

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - A - 2 641 674 (A. HÄBLER) <br> * Ansprüche 1,2,6 * <br> -- | 1,4 |
| X | GB - A - 1 268 520 (S.A. HEURTEY) <br> * Ansprüche 1,2,6 * <br> -- | 1,9 |
| | DE - C - 849 073 (F. CRAMER) <br> * Anspruch 1 * <br> -- | 1 |
| A | DE - C - 840 539 (C. OTTO) | |
| A | DE - B - 1 272 804 (HOUILLERES DU BASSIN DU NORD ET DU PAS-DE-CALAIS) | |
| A | DE - C - 927 136 (METALLGESELL-SCHAFT) <br> ---- | |

**KLASSIFIKATION DER ANMELDUNG (Int Cl³)**

C 04 B 33/32
31/12

**RECHERCHIERTE SACHGEBIETE (Int. Cl³)**

C 04 B 33/00
31/00
21/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L. aus andern Gründen angeführtes Dokument

&: Mitglied der gleichen Patent-familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 21-08-1981 | DAELEMAN |

EPA form 1503.1   06.78